# FASCICULE DE BREVET EUROPEEN

(11) **EP 2 786 845 B1**
(45) Date de publication et mention de la délivrance du brevet: **16.03.2016**
(21) Numéro de dépôt: 13162183.1
(22) Date de dépôt: 03.04.2013
(51) Int. Cl.: B25F 5/00, F16C 19/16, F16C 23/06, F16C 33/60

(54) **Outil électroportatif**
Mobiles Elektroinstrument
Portable electric tool

(43) Date de publication de la demande: 08.10.2014
(73) Titulaire: FELCO Motion SA, 2206 Les Geneveys-sur-Coffrane (CH)
(72) Inventeur: Piller, Nicolas, 1634 La Roche (CH); Rhême, Christian, 1725 Posieux (CH)
(74) Mandataire: P&TS SA (AG, Ltd.)

(56) Documents cités:
- EP-A1- 0 365 499
- EP-A1- 1 406 358
- EP-B1- 2 185 815
- WO-A1-00/22310
- WO-A1-01/20178
- WO-A1-99/02873
- WO-A1-99/02883
- WO-A1-2005/043692
- DE-A1- 2 852 179
- US-A1- 2002 037 123

## Description

### Domaine technique

La présente invention concerne un outil électroportatif selon le préambule de la revendication 1 et un procédé d'assemblage d'un tel outil. Un tel outil est connu du document EP 0 365 499 A.

### Etat de la technique

On connaît dans la technique plusieurs exemples d'outils portatifs de type sécateur ou cisailles dotés d'un actionneur électrique, hydraulique ou pneumatique, permettant ainsi d'alléger l'activité des opérateurs. Ces outils sont utilisés notamment dans le domaine de l'agriculture ou de la viticulture, par exemple pour des opérations de taille. Des actionneurs électriques, pneumatiques ou hydrauliques sont souvent aussi intégrés dans des cisailles, des pinces à sertir, des presses, et beaucoup d'autres outils utilisés dans plusieurs activités industrielles. Ces outils sont généralement munis d'une poignée permettant la saisie de l'outil par un opérateur.

On utilisera dans la suite les indications « antérieur », « avant » ou « distal » pour désigner l'extrémité de l'outil normalement la plus éloignée de l'opérateur, tandis que les termes « postérieur », « arrière » ou « proximal » sont utilisés pour indiquer l'extrémité de l'outil plus proche de l'opérateur lors de l'usage normal de l'outil.

L'extrémité avant de ces outils électroportatifs comporte en général les organes actifs de l'outil, par exemple un élément mobile et un élément fixe, l'élément mobile se déplaçant par rapport à l'élément fixe sous l'action de l'actionneur de l'outil. Dans le cas d'un sécateur électrique l'élément mobile est une lame mobile, qui se déplace par rapport à une lame fixe (élément fixe). L'extrémité arrière de ces outils électroportatifs est munie d'une poignée permettant la saisie de l'outil par l'opérateur.

L'actionneur électrique, hydraulique ou pneumatique de ces outils électroportatifs est généralement un actionneur rotatif. Sa rotation est transformée en un mouvement linéaire qui permet à l'élément mobile de se déplacer par rapport à l'élément fixe.

Afin de réaliser cette transformation l'outil électroportatif peut comprendre une tige, par exemple une vis-à-billes, qui a deux extrémités, une extrémité arrière connectée, directement ou indirectement, à l'actionneur rotatif et une extrémité avant connectée, directement ou indirectement, à l'élément mobile. Cette tige est agencée pour déplacer l'élément mobile sous l'action de l'actionneur rotatif de l'outil.

Cette vis à bille peut par exemple coopérer avec un écrou à billes monté sur cette vis. La vis à billes peut tourner sous l'action de l'actionneur rotatif et transformer la rotation de l'actionneur en un mouvement de translation axial de l'écrou à billes sur la vis à billes. L'écrou peut transmettre ce mouvement de translation à l'élément mobile par exemple à l'aide d'une bielle à laquelle il est connecté à travers une liaison mécanique, par exemple une liaison de type rotule ou une double liaison de type rotule.

Dans d'autres solutions l'actionneur rotatif peut faire tourner l'écrou à billes, qui transforme la rotation de l'actionneur en mouvement de translation axial d'une vis à billes ayant l'extrémité avant connectée à l'élément mobile. Un joint entre l'actionneur et l'écrou permet d'entrainer l'écrou à billes en rotation sur la vis à billes, de façon à déplacer la vis à billes et donc l'élément mobile relativement à l'élément fixe.

D'autres solutions sont connues pour permettre à la tige de déplacer l'élément mobile sous l'action de l'actionneur rotatif.

Généralement la tige est tenue dans sa position par deux paliers, l'un en correspondance de son extrémité avant, à proximité de l'élément mobile, et l'autre en correspondance de son extrémité arrière, à proximité de l'actionneur rotatif.

Ces paliers doivent supporter des forces axiales parfois importantes, qui dans le cas d'un sécateur sont de l'ordre de quelques kN, et en même temps garantir une haute précision radiale, qui dans l'état de la technique est perçue comme un avantage. Dans ce contexte la direction axiale est celle de l'axe principale de la tige, c'est-à-dire l'axe parallèle à la direction de la longueur de la tige, et le déplacement radial de la tige est défini par rapport à cet axe.

Les paliers de l'état de la technique sont donc réalisés avec des dimensions, des géométries et des tolérances qui permettent d'une part la transmission d'une grande force axiale, et de l'autre part empêchent tout déplacement radiale de la tige.

Le palier en correspondance de l'extrémité avant de la tige peut être constitué par exemple par une bague de guidage coulissant dans le corps de l'outil électroportatif, et qui empêche aussi le passage de poussières, corps étrangers ou gouttes de liquide de l'avant vers l'arrière de l'outil. Le corps de l'outil et la bague de guidage délimitent ainsi un volume protégé qui abrite la vis à billes et l'écrou à billes.

Le palier en correspondance de l'extrémité avant de la tige peut être constitué aussi par tout autre palier connu, par exemple un roulement à billes ou à aiguilles.

Il arrive en pratique que le centre du palier avant ne soit pas aligné avec l'axe de la tige et avec le centre du palier arrière, ce qui cause des problèmes de « mal-ronds ». Une cause possible de ce manque d'alignement des centres des paliers est la non-parfaite géométrie circulaire du palier avant, la distance entre le palier avant et le palier arrière, le fait que la tige n'est pas parfaitement insérée dans le palier avant, etc. La présence de ces « mal-ronds » implique l'existence d'un certain jeu entre la tige et le palier avant.

Pendant le fonctionnement de l'outil, la présence de ce jeu produit un bruit fastidieux, une usure du palier avant et de la tige, et cause en outre un échauffement de la partie avant de l'outil, à cause du frottement entre la tige et le palier. En outre ce jeu augmente la consommation électrique de l'outil, car l'efficacité de son fonctionnement est réduite par la présence de ce frottement. Dans le cas d'un outil portatif, il en résulte une réduction de l'autonomie.

Dans le domaine des paliers, il est d'opinion commune qu'un palier est considéré comme un palier de qualité s'il réduit ou bien empêche le déplacement radial de la tige ou de la pièce guidant le palier. Par conséquent, un homme du métier qui souhaite utiliser un palier de qualité sera incité à choisir un palier garantissant un positionnement radial précis de la pièce guidée.

Dans le cadre de l'invention, et à l'encontre de ce préjugé, la demanderesse a cependant constaté que dans le cas d'un sécateur par exemple, il était avantageux de permettre à la tige un certain déplacement radial par rapport à son axe. De cette façon la tige peut trouver une position optimale entre le palier avant et le palier arrière, qui lui permette de réduire le frottement contre ces deux paliers. Lors de la transmission de forces importantes, par exemple pendant la coupe d'une branche d'un arbre, le palier peut être conçu de manière à imposer à la tige une position radiale fixe, indépendante du palier avant.

Un jeu radial important peut certes aussi être obtenu avec un palier de faible qualité caractérisé par des jeux importants. Cependant, un tel palier de mauvaise qualité à l'extrémité arrière de la tige ne permet pas de supporter des forces axiales importantes nécessaires pour les domaines d'application de cet outil.

Donc la demanderesse a été confrontée au problème de trouver un palier qui d'un côté permet de transmettre de forces axiales importantes, de l'ordre de quelques kN, mais qui de l'autre côté permet un certain déplacement radial de la tige, afin de résoudre les problèmes de bruit, échauffement et consommation mentionnés.

### Bref résumé de l'invention

De façon surprenante et inattendue, la demanderesse à découvert que l'utilisation d'un palier oblique asymétrique en correspondance de l'extrémité arrière de la tige, et donc disposé entre la tige et l'actionneur rotatif, permet de transmettre de forces axiales importantes tout en permettent un certain déplacement radial de la tige.

Selon l'invention, défini dans la revendication 1, ce palier oblique asymétrique comprend en outre une ouverture destinée à recevoir une vis de liaison, et la tige comprend une ouverture destinée à recevoir cette vis de liaison, la vis de liaison étant donc destinée à lier ce palier oblique asymétrique avec la tige.

L'utilisation d'un tel palier pour obtenir ce déplacement radial surmonte un préjugé connu, car dans le domaine des paliers, un tel déplacement radial est perçu comme un indice de mauvaise qualité pour un palier agencé pour transmettre des forces axiales.

Cependant, des essais de la demanderesse ont montré qu'un tel palier permet un déplacement radial de la tige au moins égal à ± 0.5°, en réduisant ou même en éliminant le bruit et l'échauffement et en faisant diminuer la consommation de l'outil par rapport à tout autre palier connu. Ce déplacement radial est possible quand le palier n'est pas chargé, c'est-à-dire avant et/ou après la transmission de forces importantes de l'avant vers l'arrière de l'outil.

Ce palier présente aussi un autre avantage. En effet l'assemblage d'un palier arrière connu dans un outil électroportatif, par exemple d'un palier à aiguilles, comprend l'assemblage des différents éléments du palier, la mesure de leur jeu axial, leur dé-assemblage pour ajouter une ou plusieurs calles d'ajustement selon le jeu, le graissage des pièces et leur assemblage à nouveau.

Le palier oblique asymétrique de l'outil selon l'invention n'a pas besoin de cales d'ajustement car son jeu axial est déterminé précisément lors de sa réalisation, en choisissant précisément sa géométrie.

Le procédé d'assemblage de l'outil électroportatif selon l'invention peut comprendre les étapes suivantes :
- insertion d'une vis de liaison dans le palier oblique asymétrique, et
- fixation d'une tige sur cette vis de liaison, selon la revendication 13.

Dans une variante préférentielle au moins une bague de ce palier oblique asymétrique est intégrée avec des éléments d'un motoréducteur actionnant la tige. Dans un mode de réalisation préférentiel, le palier intègre ainsi un support pour des satellites d'un réducteur planétaires.

Le procédé d'assemblage peut comprendre une étape de fixation des satellites d'un réducteur planétaires sur le support de ce palier oblique asymétrique.

En outre d'autres mots, le support satellites est directement intégré dans le palier oblique asymétrique, ce qui simplifie encore plus le procédé d'assemblage de l'outil.

Dans une variante préférentielle le palier oblique asymétrique comprend une bague intérieure, une bague extérieure et au moins une bille. De préférence il comprend plusieurs billes disposées en couronne, par exemple huit billes.

Dans une autre variante préférentielle la bague intérieure est composée par une pièce intérieure et une pièce extérieure. La présence de deux pièces facilite le montage du palier et l'insertion des billes entre les deux bagues. Dans une autre variante la bague intérieure est composée par un nombre de pièces supérieur à un. Dans une autre variante la bague extérieure est composée aussi par un nombre de pièces supérieur à un.

Dans une autre variante la pièce intérieure comprend au moins un premier diamètre et au moins un deuxième diamètre différent du premier diamètre, de façon à ce qu'un double-chassage de la pièce intérieure dans la pièce extérieure puisse être réalisé. Ce double-chassage permet de tolérer des imprécisions de fabrication des pièces de la bague intérieure sur au moins une partie de sa longueur et de mieux contrôler la force de chassage. On évite aussi l'inconvénient de devoir rectifier ou usiner avec précision toute la longueur de la pièce à chasser.

Dans une autre variante, la tige de l'outil électroportatif appuie contre le palier en correspondance de la zone de contact entre la pièce intérieure et celle extérieure de la bague intérieure, de façon à ce qu'elle tienne les deux pièces ensemble. Dans cette variante le double-chassage de ces deux pièces n'est plus strictement nécessaire.

Avantageusement la bague intérieure comprend un premier épaulement ayant un premier diamètre et un deuxième épaulement ayant un deuxième diamètre diffèrent du premier diamètre. Avantageusement la bague extérieure comprend un troisième épaulement ayant un troisième diamètre et un quatrième épaulement ayant un quatrième diamètre diffèrent du troisième diamètre.

La présence de ces différents diamètres permet à la bille d'entrer en contact avec la bague intérieure en correspondance d'un premier point et avec la bague extérieure en correspondance d'un deuxième point lorsque le palier oblique asymétrique transmet une force dans une première direction, par exemple de l'avant vers l'arrière de l'outil électroportatif, afin de serrer l'élément mobile sur l'élément fixe.
La présence de ces différents diamètres permet aussi à la bille d'entrer en contact avec la bague intérieure en correspondance d'un troisième point différent du premier point et avec la bague extérieure en correspondance d'un quatrième point différent du deuxième point lorsque le palier oblique asymétrique transmet une force dans une deuxième direction opposée à la première direction, par exemple de l'arrière vers l'avant de l'outil électroportatif, afin d'ouvrir l'élément mobile par rapport a l'élément fixe.

En d'autres mots chaque bille a quatre points de contact possibles avec la bague intérieure et celle extérieure, qui sont actifs deux par deux, chaque fois chaque bille ayant un point de contact avec la bague intérieure et point de contact avec la bague extérieure.

Avantageusement la ligne de liaison entre le premier point et le deuxième point forme un premier angle avec l'axe de la tige et la ligne de liaison entre le troisième point et le quatrième point forme un deuxième angle avec l'axe de la tige, différent du premier angle. En d'autres mots la force est transmise de façon oblique à travers le palier, avec deux angles qui sont différents en dépendance de la direction de la force.

Cette différence d'angles permet de transmettre une grande force de l'ordre de grandeur de 5-10 kN de l'avant de l'outil vers l'arrière, lors de la fermeture de la lame mobile sur celle fixe par exemple pour couper la branche d'un arbre tout en permettant la transmission d'une force sensiblement plus petite de l'arrière de l'outil vers l'avant lors de la réouverture de la lame mobile par rapport à celle fixe.

Dans une variante le premier angle est compris dans la plage 10°-50° et le deuxième angle est compris dans la plage 25°-65°. Dans une variante préférentielle le premier angle est de 30° et le deuxième angle de 45°.

Dans une autre variante les rayons des billes et des chemins de roulement des parties des bagues intérieure et extérieure destinées à entrer en contact avec les billes sont différents et ont des valeurs calculées afin de permettre le déplacement radial de la tige au moins égal à ± 0.5°, de préférence au moins égal à ± 1°. Ces rayons ont calculés en tenant compte des efforts axiaux de poussé et de traction de l'outil électroportatif. A ces différents rayons sont associés d'autres paramètres bien connus par l'homme du métier, par exemple la forme des chemins de roulement, qui peuvent être optimisés afin de définir précisément les points de contact entre la bille et le bagues.

Dans une variante le palier oblique asymétrique de l'outil selon l'invention comprend un joint à lèvre entre la bague intérieure et celle extérieure, qui empêche à de la poussière et/ou de la saleté d'entrer dans l'outil. Dans une variante préférentielle ce joint est réalisé en caoutchouc ou dans tout autre matériau élastique qui peut être obtenu naturellement ou synthétiquement.

Dans une variante le palier oblique asymétrique comprend une cage pour séparer les billes l'une de l'autre.

Le palier oblique asymétrique de l'outil selon l'invention peut être réalisé en acier et/ou en céramique et/ou en tout autre matériau permettant de transmettre les forces en jeu dans l'outil électroportatif selon l'invention.

Dans une autre variante la périphérie externe de la bague interne de ce palier oblique asymétrique comprend au moins un évidement pour réduire le poids du palier et donc de l'outil électroportatif.

### Brève description des figures

Des exemples de mise en oeuvre de l'invention sont indiqués dans la description illustrée par les figures annexées dans lesquelles :
La figure 1 illustre une vue de section d'une partie d'un mode de réalisation de l'outil électroportatif selon l'invention.
La figure 2A illustre une vue de section d'un mode de réalisation du palier oblique asymétrique de l'outil électroportatif selon l'invention lorsque ce palier oblique asymétrique transmet une force dans une première direction.
La figure 2B illustre une vue de section du palier oblique asymétrique de la figure 2A lorsque ce palier oblique asymétrique transmet une force dans une deuxième direction opposée à la première direction.

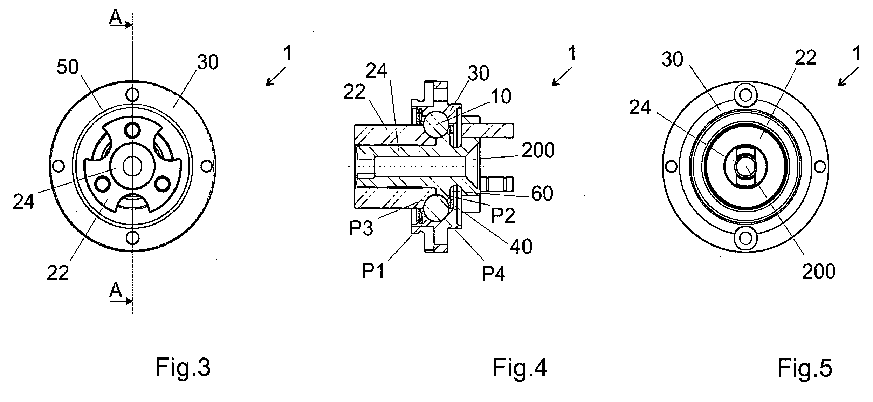

Les figures 3 à 5 illustrent respectivement une vue avant, de section et arrière d'un mode de réalisation du palier oblique asymétrique de l'outil électroportatif selon l'invention.

### Exemple(s) de mode de réalisation de l'invention

Dans la description suivante fournie à titre d'exemple, on fera référence, par simplicité, à un sécateur électroportatif. L'invention cependant n'est pas limitée à un tel instrument. L'invention n'est pas non plus limitée à l'agriculture, mais inclut aussi, par exemple des cisailles, des pinces, des presses, etc. pour des applications industrielles, médicales, ou tout autre domaine.

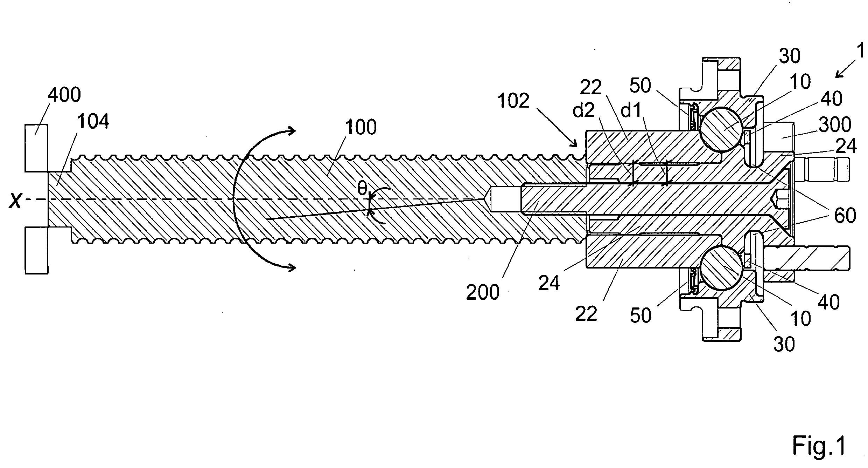

La figure 1 illustre une vue de section d'une partie d'un mode de réalisation de l'outil électroportatif selon l'invention.

Avantageusement cet outil électroportatif comprend :
- un élément mobile et un élément fixe, qui ne sont pas illustrés;
- un actionneur rotatif, qui n'est pas illustré ;
- une tige 100 agencée pour déplacer l'élément mobile sous l'action de l'actionneur rotatif ;
- un palier oblique asymétrique 1 disposé entre la tige 100 et l'actionneur rotatif.

Dans la variante illustrée la tige 100 est une vis à billes.

De façon surprenante et inattendue, la demanderesse à découvert que l'utilisation d'un palier oblique asymétrique 1 en correspondance de l'extrémité arrière de la tige 100, et donc disposé entre la tige 100 et l'actionneur rotatif, permet de transmettre de forces axiales importantes et en même temps permet un certain déplacement radial θ de la tige.

Des essais de la demanderesse ont montré qu'un tel palier 1 permet un déplacement radial θ de la tige 100 au moins égal à ± 0.5°, de préférence supérieur à ± 1 °, en réduisant ou même en éliminant le bruit et l'échauffement et en diminuant la consommation de l'outil par rapport à tout autre palier connu.

En effet ce déplacement radial permet de compenser, au moins pendant une partie de la durée de chaque cycle de coupe, les problèmes dus au mauvais alignement du palier avant 400, de la tige et du palier arrière 1.

Le déplacement radial θ est possible quand le palier 1 n'est pas chargé, c'est-à-dire avant et/ou après la transmission de forces importantes de l'avant vers l'arrière de l'outil.

Ce palier présente aussi un autre avantage. En effet l'assemblage d'un palier arrière connu dans un outil électroportatif, par exemple d'un palier à aiguilles, comprend l'assemblage des différents éléments du palier, la mesure de leur jeu axial, leur dé-assemblage pour ajouter une ou plusieurs calles d'ajustement selon le jeu, le graissage des pièces et leur assemblage à nouveau.

Le palier oblique asymétrique 1 de l'outil selon l'invention n'a pas besoin de cales d'ajustement car son jeu axial est déterminé précisément lors de sa réalisation, en choisissant précisément sa géométrie.

Donc le procédé d'assemblage de l'outil électroportatif selon l'invention peut être réduit aux étapes suivantes :
- insertion d'une vis de liaison 200 dans le palier oblique asymétrique 1,
- fixation d'une tige 100, par exemple d'une vis à billes, sur cette vis de liaison 200.

Dans une variante préférentielle ce palier oblique asymétrique 1 intègre des éléments d'un réducteur en aval du moteur entraînant la tige 100. Ainsi, dans l'exemple illustré, le palier 1 comprend aussi un support 300 pour des satellites d'un réducteur planétaires, visible par exemple sur la figure 1.

Donc le procédé d'assemblage comprend aussi l'étape suivante : - fixation des satellites d'un réducteur planétaires sur le support 300 de ce palier oblique asymétrique1.

Dans la variante de la figure 1 le palier oblique asymétrique 1 comprend une bague intérieure 20, composée par une pièce intérieure 24 et une pièce extérieure 22, une bague extérieure 30 et au moins une bille 10.

La présence des deux pièces 22, 24 facilite le montage du palier 1 et l'insertion des billes 10 entre les deux bagues 20, 30. Dans une autre variante la bague intérieure 20 est composée par un nombre de pièces supérieur à un. Dans une autre variante la bague extérieure 30 est composée aussi par un nombre de pièces supérieur à un.

Comme visible sur la figure 1, la pièce intérieure 24 comprend au moins un premier diamètre d₁ et au moins un deuxième diamètre d₂ différent du premier diamètre d₁, de façon à ce qu'un double-chassage de la pièce intérieure 24 dans la pièce extérieure 22 puisse être réalisé. Ce double-chassage permet de pouvoir tolérer des imprécisions de fabrication des pièces de la bague intérieure 20 sur au moins une partie de sa longueur et de mieux contrôler la force de chassage.

Comme visible sur la figure 1, la tige 100 de l'outil électroportatif appuie contre le palier 1 en correspondance de la zone de contact entre la pièce intérieure 24 et celle extérieure 22 de la bague intérieure, de façon à ce qu'elle tienne les deux pièces 22, 24 ensemble. Dans cette variante le double-chassage de ces deux pièces 22, 24 n'est plus strictement nécessaire.

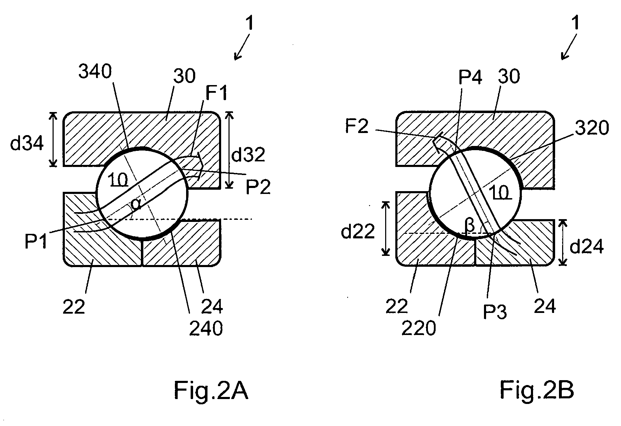

Comme visible sur les figures 2A et 2B, la bague intérieure peut avantageusement comprendre un premier épaulement ayant un premier diamètre d₂₂ et un deuxième épaulement ayant un deuxième diamètre d₂₄ diffèrent du premier diamètre d₂₂. Avantageusement la bague extérieure 30 comprend un troisième épaulement ayant un troisième diamètre d₃₄ et un quatrième épaulement ayant un quatrième diamètre d₃₂ diffèrent du troisième diamètre d₃₄.

La présence de ces différents diamètres permet à la bille 100 d'entrer en contact avec la bague intérieure 20, notamment avec sa pièce extérieure 22, en correspondance d'un premier point P1 et avec la bague extérieure 30 en correspondance d'un deuxième point P2 lorsque le palier oblique asymétrique 1 transmet une force F₁ dans une première direction, par exemple de l'avant vers l'arrière de l'outil électroportatif, afin de serrer l'élément mobile sur l'élément fixe, comme visible sur la figure 2A.

A ces différents diamètres sont associés d'autres paramètres bien connus par l'homme du métier, par exemple la forme des chemins de roulement, qui peuvent être optimisés afin de définir précisément les points de contact P1 à P4 entre la bille 10 et le bagues 20, 30. Dans une variante cette forme permet que des espaces 240, 340 respectivement 220, 320 se forment entre la bille 10 et les bagues 20, 30 quand la bille 10 se trouve dans les conditions de la figure 2A respectivement 2B.

La présence de ces différents diamètres permet aussi à la bille 10 d'entrer en contact avec la bague intérieure, notamment avec sa pièce intérieure 24, en correspondance d'un troisième point P3 différent du premier point P1, et avec la bague extérieure 30 en correspondance d'un quatrième point P4 différent du deuxième point P2 lorsque le palier oblique asymétrique 1 transmet une force F₂ dans une deuxième direction opposée à la première direction, par exemple de l'arrière vers l'avant de l'outil électroportatif, afin d'ouvrir l'élément mobile par rapport à l'élément fixe, comme visible sur la figure 2B.

En d'autres mots chaque bille 10 a quatre points de contact possibles P1 à P4 avec la bague intérieure et celle extérieure, qui sont actifs deux par deux (P1-P2, P3-P4), chaque fois chaque bille ayant un point de contact avec la bague intérieure et point de contact avec la bague extérieure.

Avantageusement la ligne de liaison entre le premier point P1 et le deuxième point P2 forme un premier angle α avec l'axe de la tige x et la ligne de liaison entre le troisième point P3 et le quatrième point P4 forme un deuxième angle β avec l'axe de la tige, différent du premier angle α. En d'autres mots la force est transmise de façon oblique à travers le palier, avec deux angles α et β qui sont différents en dépendance de la direction de la force, comme visible sur les figures 2A et 2B.

Cette différence d'angles permet de transmettre une grande force F₁ de l'ordre de grandeur de 5-10 kN de l'avant de l'outil vers l'arrière, lors de la fermeture de la lame mobile sur celle fixe par exemple pour couper la branche d'un arbre tout en permettant la transmission d'une force F₂ sensiblement plus petite de l'arrière de l'outil vers l'avant lors de la réouverture de la lame mobile par rapport à celle fixe.

Dans une variante le premier angle α est compris dans la plage 10°-50° et le deuxième angle β est compris dans la plage 25°-65°. Dans une variante préférentielle le premier angle α est de 30° et le deuxième angle β de 45°.

Comme visibles sur les figures 2A et 2B, les rayons des billes 10 et des chemins de roulement des parties des bagues intérieure 22, 24 et extérieure 30 destinées à entrer en contact avec les billes 10 sont différents et ont des valeurs calculées afin de permettre le déplacement radial θ de la tige 100 au moins égal à ± 0.5°, de préférence au moins égal à ± 1 °. Ces rayons ont calculés en tenant compte des efforts axiaux de poussé et de traction de l'outil électroportatif.

Dans une variante le palier oblique asymétrique de l'outil selon l'invention comprend un joint à lèvre 50 entre la bague intérieure et celle extérieure, qui empêche à de la poussière et/ou de la saleté d'entrer dans l'outil. Dans une variante préférentielle ce joint est réalisé en caoutchouc ou dans tout autre matériau élastique qui peut être obtenu naturellement ou synthétiquement.

Dans une variante le palier oblique asymétrique comprend une cage 40 pour séparer les billes 10 l'une de l'autre.

Le palier oblique asymétrique 1 de l'outil selon l'invention peut être réalisé en acier et/ou en céramique et/ou en tout autre matériau permettant de transmettre les forces en jeu dans l'outil électroportatif selon l'invention.

Dans une autre variante la périphérie externe de la bague interne de ce palier oblique asymétrique comprend au moins un évidement 60 pour réduire le poids du palier et donc de l'outil électroportatif.

Comme visible sur la figure 1, ce palier oblique asymétrique 1 peut comprendre une ouverture destinée à recevoir une vis de liaison 200, et la tige 100 comprend une ouverture destinée à recevoir cette vis de liaison 200, la vis de liaison 200 étant donc destinée à lier ce palier oblique asymétrique 1 à la tige 100.

### Numéros de référence employés sur les figures

- 1: Palier oblique asymétrique
- 10: Bille
- 20: Bague intérieure
- 22: Pièce extérieure de la bague 20
- 24: Pièce intérieure de la bague 20
- 30: Bague extérieure
- 40: Cage
- 50: Joint à lèvre
- 60: Evidement
- 100: Tige, par exemple vis à billes
- 102: Première extrémité de la vis à billes
- 104: Deuxième extrémité de la vis à billes
- 200: Vis de liaison
- 300: Support satellites
- 400: Palier
- 220: Espace entre la bille et la pièce 22
- 240: Espace entre la bille et la pièce 24
- 320, 340: Espaces entre la bille et la bague 30
- x: Axe de la tige
- α: Premier angle entre l'axe de la tige et la ligne de liaison entre le point P1 et le point P2
- β: Deuxième angle entre l'axe de la tige et la ligne de liaison entre le point P3 et le point P4
- θ: Déplacement radial de la tige
- P1: Premier point de contact entre la bille et la bague intérieure
- P2: Deuxième point de contact entre la bille et la bague extérieure
- P3: Troisième point de contact entre la bille et la bague intérieure
- P4: Quatrième point de contact entre la bille et la bague extérieure
- d₁: Premier diamètre de la pièce intérieure 24
- d₂: Deuxième diamètre de la pièce intérieure 24
- d₂₂: Premier diamètre du premier épaulement de la bague intérieure 20
- d₂₄: Deuxième diamètre du deuxième épaulement de la bague intérieure 20
- d₃₄: Troisième diamètre du troisième épaulement de la bague extérieure 30
- d₃₂: Quatrième diamètre du quatrième épaulement de la bague extérieure 30
- F₁: Force transmise de l'avant vers l'arrière de l'outil
- F₂: Force transmise de l'arrière vers l'avant de l'outil

## Revendications

1. Outil électroportatif comprenant :
- un élément mobile et un élément fixe
- un actionneur rotatif
- une tige (100) agencée pour déplacer ledit élément mobile sous l'action dudit actionneur rotatif
**caractérisé en ce qu'**il comprend :
- un palier oblique asymétrique (1) disposé entre la tige (100) et l'actionneur rotatif
dans lequel ledit palier oblique asymétrique (1) comprend une ouverture destinée à recevoir une vis de liaison (200), et ladite tige (100) comprend une ouverture destinée à recevoir ladite vis de liaison (200), ladite vis de liaison (200) étant destinée à lier ledit palier oblique asymétrique (1) avec ladite tige (100).

2. L'outil selon la revendication 1, ledit palier oblique asymétrique (1) étant agencé pour permettre à ladite tige (100) un déplacement radial (θ) au moins égal à ± 0.5°.

3. L'outil selon l'une des revendications 1 ou 2, comprenant un réducteur, ledit palier oblique asymétrique (1) intégrant des composants dudit réducteur.

4. L'outil selon la revendication 3, le réducteur étant un réducteur planétaire comprenant des satellites, dans lequel ledit palier oblique asymétrique (1) comprend un support (300) pour lesdits satellites.

5. L'outil selon l'une des revendications 1 à 4, dans lequel ledit palier oblique asymétrique (1) comprend une bague intérieure (20), une bague extérieure (30) et au moins une bille (10).

6. L'outil selon la revendication 5, dans lequel ladite bague intérieure (20) est composée par une pièce intérieure (24) et une pièce extérieure (22).

7. L'outil selon la revendication 6, dans lequel ladite pièce intérieure (24) comprend au moins un premier diamètre (d₁) et au moins un deuxième diamètre (d₂) de façon à ce qu'un double-chassage de ladite pièce intérieure (24) dans ladite pièce extérieure (22) puisse être réalisé.

8. L'outil selon l'une des revendications 5 à 7, agencé de manière à ce que :
- lorsque ledit palier oblique asymétrique (1) transmet une force (F₁) dans une première direction, afin de serrer ledit élément mobile sur ledit élément fixe, ladite bille (10) est agencée pour entrer en contact avec ladite bague intérieure (20) en correspondance d'un premier point (P1) et avec la bague extérieure (30) en correspondance d'un deuxième point (P2), et dans lequel
- lorsque ledit palier oblique asymétrique (1) transmet une force (F₂) dans une deuxième direction opposée à la première direction, afin d'ouvrir ledit élément mobile par rapport audit élément fixe, ladite bille (10) est agencée pour entrer en contact avec ladite bague intérieure (20) en correspondance d'un troisième point (P3) différent du premier point (P1) et avec la bague extérieure (30) en correspondance d'un quatrième point (P4) différente du deuxième point (P2).

9. L'outil selon la revendication 8, dans lequel la ligne de liaison entre le premier point (P1) et le deuxième point (P2) forme un premier angle (α) avec l'axe de la tige (100) et la ligne de liaison entre le troisième point (P3) et le quatrième point (P4) forme un deuxième angle (β) avec l'axe de la tige (100), différent du premier angle (α),
ledit premier angle (α) étant compris dans la plage 10°-50°et ledit deuxième angle ( (3) étant compris dans la plage 25°-65°.

10. L'outil selon l'une des revendications 5 à 9, dans lequel ledit palier oblique asymétrique (1) comprend un joint à lèvre (50) entre la bague intérieure (20) et celle extérieure (30).

11. L'outil selon l'une des revendications 5 à 10, dans lequel ledit palier oblique asymétrique (1) comprend une cage (40) pour séparer les billes (10).

12. L'outil selon l'une des revendications 5 à 11, dans lequel la périphérie externe de la bague interne (20) dudit palier oblique asymétrique (1) comprend au moins un évidement (60) pour réduire le poids dudit palier (1).

13. Procédé d'assemblage d'un outil électroportatif comprenant les étapes suivantes :
- insertion d'une vis de liaison (200) dans un palier oblique asymétrique (1),
- fixation d'une tige (100) sur cette vis de liaison (200).

14. Le procédé selon la revendication précédente, ledit palier oblique asymétrique (1) comprenant un support (300) pour des satellites d'un réducteur planétaires, ledit procédé comprenant :
- fixation des satellites d'un réducteur planétaires sur le support (300) dudit palier oblique asymétrique (1).

## Patentansprüche

1. Tragbares elektrisches Werkzeug aufweisend:
- ein mobiles Element und ein festes Element
- einen rotierenden Aktuator
- eine Stange (100) ausgebildet um das mobile Element bei Aktion des rotierenden Aktuators zu bewegen
**gekennzeichnet dadurch, dass** es aufweist:
- ein asymmetrisches schräges Lager (1) angeordnet zwischen der Stange (100) und dem rotierenden Aktuator
wobei das asymmetrische schräge Lager (1) eine Öffnung aufweist, die für das Empfangen einer Verbindungsschraube (200) ausgebildet ist, und die Stange (100) eine Öffnung aufweist, ausgebildet die Verbindungsschraube zu empfangen, wobei die Verbindungsschraube (200) ausgebildet ist, das asymmetrische schräge Lager (1) mit der Stange (100) zu verbinden.

2. Das Werkzeug nach Anspruch 1, wobei die asymmetrische schräge Lagerung (1) ausgebildet ist, der Stange (100) eine radiale Bewegung (θ) mindestens gleich ± 0.5° zu erlauben.

3. Das Werkzeug nach einem der Ansprüche 1 oder 2, aufweisend ein Reduktionsgetriebe, wobei das asymmetrische schräge Lager (1) Komponenten des Reduktionsgetriebes integriert.

4. Das Werkzeug nach Anspruch 3, wobei das Reduktionsgetriebe ein Planetengetriebe mit Umlaufrädern ist, wobei das asymmetrische schräge Lager (1) eine Lagerung (300) für die Umlaufräder aufweist.

5. Das Werkzeug nach einem der Ansprüche 1 bis 4, wobei das asymmetrische schräge Lager (1) einen inneren Ring (20) und einen äusseren Ring (30) und mindestens ein Kugel (10) aufweist.

6. Das Werkzeug nach Anspruch5, wobei der innere Ring aus einem inneren Teil (24) und einem äusseren Teil (22) besteht.

7. Das Werkzeug nach ANspruch 6, wobei der innere Teil (24) mindestens einen ersten Durchmesser (d₁) und mindestens einen zweiten Durchmesser (d₂) hat so dass eine doppelte Einpressung des inneren Teils (24) und des äusseren Teils (22) erreicht werden kann.

8. Das Werkzeug nach einem der Ansprüche 5 bis 7, ausgebildet dass:
- wenn das asymmetrische schräge Lager (1) eine Kraft (F₁) in eine erste Richtung überträgt, um das mobile Element auf dem festen Element zu sichern, die Kugel (10) ausgebildet ist, bezüglich einem ersten Punkt (P1) in Kontakt mit dem inneren Ring (20) zu kommen und bezüglich einem zweiten Punkt (P2) in Kontakt mit dem äusseren Ring (30) zu kommen, und wobei
- wenn das asymmetrische schräge Lager (1) eine Kraft (F₂) in eine zu der ersten Richtung entgegengesetzte zweite Richtung überträgt, um das mobile Element gegenüber dem festen Element zu öffnen, die Kugel (10) ausgebildet ist, bezüglich einem von dem ersten Punkt (P1) verschiedenen dritten Punkt (P3) in Kontakt mit dem inneren Ring (20) zu kommen und bezüglich einem von dem zweiten Punkt (P2) verschiedenen vierten Punkt (P4) in Kontakt mit dem äusseren Ring (30) zu kommen.

9. Das Werkzeug nach Anspruch 8, wobei die Verbindungslinie zwischen dem ersten Punkt (P1) und dem zweiten Punkt (P2) einen ersten Winkel (α) mit der Achse (x) der Stange (100) ausbildet und die Verbindungslinie zwischen dem dritten Punkt (P3) und dem vierten Punkt (P4) einen zweiten Winkel (β) mit der Achse (x) der Stange (100) ausbildet, der unterschiedlich zu dem ersten Winkel (α) ist,
wobei der erste Winkel (α) in dem Bereich von 10° - 50° und der zweite Winkel (β) in dem Bereich von 25° bis 65° enthalten ist.

10. Das Werkzeug nach einem der Ansprüche 5 bis 9, wobei das asymmetrische schräge Lager (1) eine Lippendichtung (50) zwischen dem inneren Ring (20) und dem äusseren Ring (30) aufweist.

11. Das Werkzeug nach einem der Ansprüche 5 bis 10, wobei das asymmetrische schräge Lager (1) einen Käfig (40) zum Separieren der Kugeln (10) aufweist.

12. Das Werkzeug nach einem der Ansprüche 5 bis 11, wobei die äussere Umrandung des inneren Rings (20) des asymmetrischen schrägen Lagers (1) mindestens eine Ausnehmung (60) zur Reduzierung des Gewichts des Lagers (1) aufweist.

13. Verfahren zum Zusammenbauen eines tragbaren elektrischen Werkzeugs, aufweisend die folgenden Schritte:
- Einfügen eine Verbindungsschraube (200) in ein asymmetrisches schräges Lager (1),
- Befestigen eines Stange (100) auf dieser Verbindungsschraube (200).

14. Das Verfahren nach dem vorigen Anspruch, wobei das asymmetrische schräge Lager (1) eine Lagerung (300) für Umlaufräder eines Planetengetriebes (1) aufweist, wobei das Verfahren aufweist:
- Befestigen der Umlaufräder eines Planetenreduktionsgetriebes auf der Lagerung (300) des asymmetrischen schrägen Lagers (1).

## Claims

1. Handheld power tool comprising:
- a mobile element and a fixed element
- a rotary actuator
- a rod (100) arranged for moving said mobile element under the action of said rotary actuator
**characterized in that** it comprises:
- an asymmetric oblique bearing (1) arranged between the rod (100) and the rotary actuator
wherein said asymmetric oblique bearing (1) comprises an opening intended to receive a connecting screw (200), and said rod (100) comprises an opening designed to receive said connecting screw (200), said connecting screw (200) being intended to link said asymmetric oblique bearing (1) to said rod (100).

2. The tool according to claim 1, wherein said asymmetric oblique bearing (1) is arranged to allow said rod (100) a radial movement (θ) at least equal to ± 0.5°.

3. The tool according to one of the claims 1 or 2, comprising a reduction gear, wherein said asymmetric oblique bearing (1) integrates components of said reduction gear.

4. The tool according to claim 3, wherein said reduction gear is a planetary reduction gear comprising satellites, wherein said asymmetric oblique bearing (1) comprises a support (300) for said satellites.

5. The tool according to one of the claims 1 to 4, wherein said asymmetric oblique bearing (1) comprises an inner ring (20), an outer ring (30) and at least one ball (10).

6. The tool according to claim 5, wherein said inner ring (20) is composed by an inner part (24) and an outer part (22).

7. The tool according to claim 6, wherein said inner part (24) comprises at least a first diameter (d₁) and at least a second diameter (d₂) so that a double press-in of said inner part (24) in said outer part (22) can be achieved.

8. The tool according to one of the claims 5 to 7, arranged so that:
- when said asymmetric oblique bearing (1) transmits a force (F₁) in a first direction, in order to secure said mobile element onto said fixed element, said ball (10) is arranged to come into contact with said inner ring (20) in correspondence with a first point (P1) and with the outer ring (30) in correspondence with a second point (P2), and wherein
- when said asymmetric oblique bearing (1) transmits a force (F₂) in a second direction opposed to the first direction, in order to open said mobile element relative to said fixed element, said ball (10) is arranged to come into contact with said inner ring (20) in correspondence with a third point (P3) different from the first point (P1) and with the outer ring (30) in correspondence with a fourth point (P4) different from the second point (P2).

9. The tool according to claim 8, wherein the connection line between the first point (P1) and the second point (P2) forms a first angle (α) with the axis (x) of the rod (100) and the connection line between the third point (P3) and the fourth point (P4) forms a second angle (β) with the axis (x) of the rod (100), different from the first angle (α),
said first angle (α) being comprised in the range 10°-50° and said second angle (β) being comprised in the range 25°-65°.

10. The tool according to one of the claims 5 to 9, wherein said asymmetric oblique bearing (1) comprises a lip joint (50) between the inner ring (20) and the outer one (30).

11. The tool according to one of the claims 5 to 10, wherein said asymmetric oblique bearing (1) comprises a cage (40) to separate the balls (10).

12. The tool according to one of the claims 5 to 11, wherein the outer periphery of the inner ring (20) of said asymmetric oblique bearing (1) comprises at least one recess (60) to reduce the weight of said bearing (1).

13. Method for assembling a handheld power tool, comprising the following steps:
- inserting a connecting screw (200) in an asymmetric oblique bearing (1),
- fastening a rod (100) on this connecting screw (200).

14. The method according to the preceding claim, said asymmetric oblique bearing (1) comprising a support (300) for satellites of a planetary reduction gear, said method comprising:
- fastening the satellites of a planetary reduction gear onto the support (300) of said asymmetric oblique bearing (1).
